# EUROPÄISCHE PATENTSCHRIFT

(11) **EP 3 032 275 B1**
(45) Veröffentlichungstag und Bekanntmachung des Hinweises auf die Patenterteilung: **17.05.2017**
(21) Anmeldenummer: 15190089.1
(22) Anmeldetag: 16.10.2015
(51) Int. Cl.: G01S 7/481, G01S 17/42, G01S 17/87

(54) **OPTOELEKTRONISCHER SENSOR UND VERFAHREN ZUM ERFASSEN VON OBJEKTEN**
OPTOELECTRONIC SENSOR AND METHOD FOR DETECTING OBJECTS
CAPTEUR OPTOELECTRONIQUE ET PROCEDE DESTINE A LA SAISIE D'OBJETS

(30) Priorität: 08.12.2014 DE 102014118149
(43) Veröffentlichungstag der Anmeldung: 15.06.2016
(73) Patentinhaber: SICK AG, 79183 Waldkirch (DE)
(72) Erfinder: Nübling, Herr Ralf Ulrich, 79211 Denzlingen (DE)

(56) Entgegenhaltungen:
- EP-A1- 2 381 272
- EP-A2- 1 965 225
- DE-A1- 4 412 044
- DE-A1- 10 105 774
- DE-A1- 10 304 188
- DE-A1-102008 032 216
- DE-A1-102009 035 984
- Andrew Lynch ET AL: "Beam manipulation: prisms vs. mirrors", Photonik International, vol. 2009, no. 2, 12 November 2009 (2009-11-12), pages 45-47, XP055157575,

## Beschreibung

Die Erfindung betrifft einen optoelektronischen Sensor und ein Verfahren zum Erfassen von Objekten in einem Überwachungsbereich nach dem Oberbegriff von Anspruch 1 beziehungsweise 6.

Scanner werden für vielfältige Überwachungs- und Vermessungsaufgaben verwendet. Dazu tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonrad auf, um periodisch eine Überwachungsebene oder ein Segment einer zweidimensionalen Überwachungsebene abzutasten. Viele Anwendungen erfordern aber die Abtastung eines dreidimensionalen Raumbereichs und nicht lediglich einer Fläche. Ein herkömmlicher Ausweg besteht darin, für eine Relativbewegung zwischen Laserscanner und Objekt zu sorgen, wie beispielsweise in der DE 197 41 730 B4. Dies erfordert erheblichen Aufwand, und zahlreiche Anwendungen eignen sich gar nicht für eine solche kontrollierte Relativbewegung.

Um eine Bewegung des Laserscanners gegenüber dem zu vermessenden Objekt zu vermeiden, werden Laserscanner zu einem 3D-Scanner weitergebildet. Ein Schritt in diese Richtung durch Mehrebenenabtastung kann erreicht werden, indem Rasterspiegelräder mit unterschiedlich geneigten Facetten als Ablenkeinheit verwendet werden. Dadurch entsteht ein Winkelversatz der jeweils zu einer Facette gehörigen Abtastebene. Zugleich wird aber der Scanwinkelbereich der jeweiligen Abtastebene auf den Winkelanteil der Facette von typischerweise weniger als 100° beschränkt. Außerdem werden die jeweiligen Abtastebenen verzerrt und unsymmetrisch. Die EP 1 286 178 A2 überwacht nach einem ganz ähnlichen Prinzip in einem vorderen Winkelbereich von nahezu 180° eine Hauptabtastebene und in einem rückwärtigen Winkelbereich über zwei um wenige Grad verkippten Spiegel zwei weitere Abtastebenen, die auf einen Winkelbereich von 40° beschränkt sind.

Als weiterer Lösungsansatz ist bekannt, eine zusätzliche Ablenkeinheit meist in Form eines Schwingspiegels zu verwenden, der für eine Ablenkung des Scanstrahls in einer zweiten Richtung sorgt. Dadurch kann die Abtastebene verschwenkt werden. Durch die Verwendung zweier Ablenkeinheiten entstehen aber erhöhte Kosten und ein größerer Bauraumbedarf, somit ein hoher optischer und mechanischer Aufwand, zudem mit zusätzlichen Sende- und Empfangssignalverlusten. In einer speziellen Lösung mit zusätzlichem Schwingspiegel gemäß DE 20 2009 012 114 U1 wird der 360°-Abtastbereich eines Drehspiegels aufgeteilt. In einem vorderen Winkelbereich wird in herkömmlicher Weise eine Fläche abgetastet. In einem hinteren Winkelbereich wird der Abtaststrahl mehrfach umgelenkt und fällt dann auf einen Schwingspiegel, der in einer Richtung quer zu der Ablenkrichtung des Drehspiegels verschwenkt wird. Somit wird über den hinteren Winkelbereich ein Raumausschnitt anstelle einer Fläche abgetastet.

Um mit einem einfachen Drehspiegel auszukommen und dennoch einen dreidimensionalen Raumbereich zu erfassen, kann der Drehspiegel zusätzlich zu seiner Rotation in einer weiteren Achse verkippt werden. In der DE 10 2008 032 216 A1 beispielsweise wird dazu die gesamte Scaneinheit samt Sender, Empfänger und Drehspiegel auf einem Ablenkteller angeordnet. Durch Verschwenken des Ablenktellers wird dann die Scanebene variiert, um so insgesamt einen dreidimensionalen Raumbereich zu überwachen. Die mechanische Konstruktion mit dem verschwenkbaren Ablenkteller sowie dessen Anbindung für Datenaustausch und Kommunikation ist aber ausgesprochen aufwändig.

Aus der EP 1 965 225 A2 ist ein weiterer Laserscanner mit einer drehbaren und zusätzlich verkippbaren Ablenkeinheit vorgesehen, um eine dreidimensionale Umgebung mit einem Laserstrahl abzutasten. Es wird in unterschiedlichen Ausführungsformen eine Vielzahl von Mechanismen zum Verkippen der Ablenkeinheit vorgeschlagen. Erneut sind die Mechanismen zum Schwenken der Abtastebene recht aufwändig.

In der WO2014/010107A1 wird ein rotierendes Prisma in den Lichtpfad zwischen Drehspiegel und Sende-/Empfangseinheit eingebracht. Dadurch wird der Abtaststrahl periodisch verschwenkt, und diese Bewegung überlagert sich mit der Abtastung durch den Drehspiegel zu einer dreidimensionalen Abtastkurve. Diese Lösung ist aber für viele Anwendungen nicht flexibel genug.

Aus der DE 101 05 774 A1 ist ein Laserscanner bekannt, in dem zur dreidimensionalen Abtastung einerseits ein Messkopf um eine erste Achse und andererseits ein Spiegelprisma in dem Messkopf um eine zweite Achse rotiert.

Die DE 10 2009 035 984 A1 offenbart einen multifunktionalen Laufzeitsensor mit einer um ihre Achse fortlaufend um eine erste Achse rotierenden Abtasteinheit. In einer Ausführungsform wird in dieser Abtasteinheit ein weiterer Rotor mittels eines in der Abtasteinheit angeordneten zusätzlichen Motors um eine zur ersten Achse senkrecht angeordneten zweiten Achse gedreht.

Vor diesem Hintergrund ist Aufgabe der Erfindung, die Erweiterung des Überwachungsbereichs eines optoelektronischen Sensors mit einfachen Mitteln zu ermöglichen.

Diese Aufgabe wird durch einen optoelektronischen Sensor und ein Verfahren zum Erfassen von Objekten in einem Überwachungsbereich nach Anspruch 1 beziehungsweise 6 gelöst. Dabei geht die Erfindung von dem Grundgedanken aus, außer der üblichen periodischen Bewegung der ersten Ablenkeinheit eine weitere Bewegung vorzusehen, die für eine zusätzliche Strahlablenkung sorgt. Ein Zusatzantrieb, welcher die weitere Bewegung erzeugt, ist dabei mit der durch einen Hauptantrieb bewegten ersten Ablenkeinheit mitbewegt. Die beiden Bewegungen vollziehen sich bezüglich verschiedener Achsen, die einen Winkel einschließen, also nicht parallel zueinander sind.

Die Erfindung hat den Vorteil, dass sich aus der Überlagerung der Bewegung der Ablenkeinheiten ein dreidimensionales Abtastmuster ergibt. Der mitbewegte Zusatzantrieb ermöglicht zudem Ausführungsformen mit nochmals erweitertem Überwachungsbereich.

Der Sensor ist vorzugsweise entfernungsmessend. Dazu ist die Auswertungseinheit für eines der einleitend genannten Lichtlaufzeiten ausgebildet. Mit den Winkelstellungen der Ablenkeinheiten und der Entfernung können dreidimensionale Positionsdaten erfasst werden.

Die weitere Ablenkeinheit weist ein Prisma auf. Die zusätzliche Ablenkung findet also in Transmission statt. Das sorgt dafür, dass der Abtaststrahl auf einem Kegelmantel bewegt wird.

Die periodische Bewegung der ersten Ablenkeinheit und/oder die Bewegung der weiteren Ablenkeinheit ist bevorzugt eine Drehbewegung. Die Ablenkeinheiten rotieren also um Drehachsen, die schräg zueinander stehen und somit einen von einer Parallelstellung abweichenden Winkel einschließen. Abhängig von dem Verhältnis der Drehgeschwindigkeiten entsteht ein periodischer dreidimensionaler Abtastpfad. Alternativ ist denkbar, die erste Ablenkeinheit hin- und herzuschwenken. Die zweite Ablenkeinheit kann alternativ zu einer Drehbewegung auf einen bestimmten Winkel eingestellt beziehungsweise nur temporär bewegt werden, um so jeweils eine bestimmte Abtastebene auszuwählen.

Der Sensor weist bevorzugt eine drahtlose Versorgungseinheit zur Versorgung des Zusatzantriebs auf. Der Zusatzantrieb ist mitbewegt, so dass die Versorgung die Relativbewegung überwinden muss. Dies ist prinzipiell über Schleifringe oder dergleichen denkbar, aber eine drahtlose Versorgungseinheit etwa nach dem Transformationsprinzip vermeidet mechanische Belastung und ist damit wartungsarm.

Der Sensor weist eine Sockeleinheit mit dem ersten Antrieb und eine Abtasteinheit mit der ersten Ablenkeinheit, dem Zusatzantrieb und der weiteren Ablenkeinheit auf, wobei auch Lichtsender und/oder Lichtempfänger in der Abtasteinheit untergebracht sind. Damit bewegt oder rotiert der Hauptantrieb die Abtasteinheit als Mess- oder Optikkopf, und der Zusatzantrieb ist ebenfalls Teil der bewegten Abtasteinheit und bewegt die weitere Ablenkeinheit relativ zu der Abtasteinheit. Vorzugsweise ist dabei eine drahtlose Versorgung und Datenübertragung vorgesehen. Alternativ zu einer Abtasteinheit mit Lichtsender und/oder Lichtempfänger ist nur ein Drehspiegel als erste Ablenkeinheit vorgesehen, der allerdings durch den mit dem Drehspiegel mitbewegten Zusatzantrieb in zwei Achsen bewegt wird.

Die Abtasteinheit weist mehrere Lichtempfänger und/oder Lichtsender auf. Bevorzugt sind mehrere Lichtsender/Lichtempfänger-Paare gebildet. Die Lichtempfänger und Lichtsender können je nach Anzahl und gewünschten Abtastkurven zueinander einen Winkelversatz aufweisen, beispielsweise um 180° zueinander versetzt zugleich nach vorne und hinten abtasten, und/oder übereinander angeordnet werden.Es sind mehrere Zusatzantriebe und weitere Ablenkeinheiten vorgesehen, die jeweils Lichtempfängern und/oder Lichtsendern zugeordnet sind. Insbesondere sind also Lichtsender-/Empfängerpaaren jeweils eigene rotierende Prismen zugeordnet. Deren Bewegung kann synchronisiert sein, muss es aber nicht. Es ergeben sich die entsprechenden dreidimensionalen Abtastkurven. Auch das Vermischen mit Lichtsender-/Lichtempfängerpaaren ohne zugeordnete weitere Ablenkeinheit ist denkbar, die dann wie herkömmlich eine Ebenenabtastung vornehmen. Prinzipiell ist denkbar, dieselbe weitere Ablenkeinheit mehreren Lichtsendern und Lichtempfängern zuzuordnen, aber das ergibt relativ unübersichtliche Abtastkurven.

Vorzugsweise ist ein Tubus vorgesehen, welcher einen Sendelichtpfad des ausgesandten Lichtstrahls umgibt. Dadurch wird optisches Übersprechen unterdrückt. Bevorzugt wird zudem eine kollineare Anordnung von Sende- und Empfangspfad erreicht, indem die Sendelinse in der Empfangslinse angeordnet wird.

Die zweite Ablenkeinheit weist vorzugsweise einen Tubusabschnitt auf. Dadurch wird ein optisches Übersprechen innerhalb der zweiten Ablenkeinheit verhindert. Zusammen mit einem Tubus um den Sendelichtstrahl wird so eine vollständige Kanaltrennung von Sendepfad und Empfangspfad erreicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Figuren der Zeichnung zeigen in:
- Fig. 1: eine schematische Schnittdarstellung eines Laserscanners mit einem in zwei Achsen rotierenden Prismenspiegel;
- Fig. 2: eine schematische Schnittdarstellung einer Ausführungsform eines Laserscanners mit mehreren Sende-/Empfangseinheiten und zugeordneten rotierenden Prismen; und
- Fig. 3: eine schematische Schnittdarstellung einer weiteren Ausführungsform eines Laserscanners mit rotierendem Prisma und Kanaltrennung durch einen Tubus um den Sendelichtpfad.

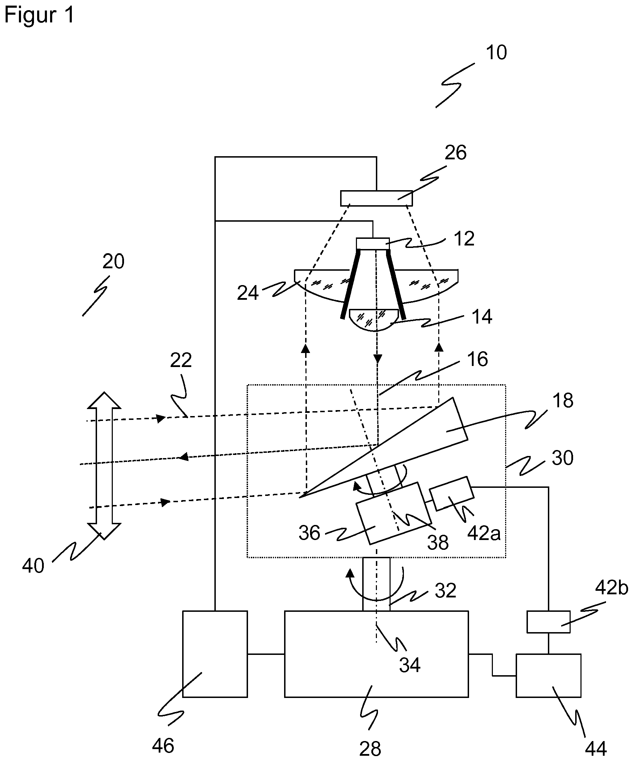

Figur 1 zeigt eine Schnittdarstellung eines als Laserscanner ausgebildeten Sensors 10 in einer Ausführungsform, die nicht in den Schutzbereich der Ansprüche fällt. Ein Lichtsender 12, beispielsweise eine LED oder eine Laserdiode, sendet über eine Sendeoptik 14 einen Sendelichtstrahl oder Abtaststrahl 16 aus, der nach Ablenkung an einer als Prismenspiegel ausgebildeten Ablenkeinheit 18 aus dem Laserscanner 10 in einen Überwachungsbereich 20 austritt. Wird von dem Sendelichtstrahl 16 ein Objekt angetastet, so kehrt reflektiertes oder remittiertes Licht 22 zu dem Laserscanner 10 zurück und wird nach erneuter Ablenkung an der Ablenkeinheit 18 von einer Empfangsoptik 24 auf einen Lichtempfänger 26 gebündelt. Die mögliche Wellenlänge des verwendeten Lichts umfasst außer sichtbarem Licht auch den ultravioletten oder infraroten Bereich.

Ein Hauptantrieb 28 versetzt eine Abtasteinheit 30 mit der Ablenkeinheit 18 in eine periodische Bewegung, insbesondere eine Drehbewegung bezüglich einer durch eine Welle 32 vorgegebenen Drehachse 34. In der Abtasteinheit 30 befindet sich ein mit der Abtasteinheit 30 mitbewegter Zusatzantrieb 36, welcher die Ablenkeinheit 18 um eine zweite Achse 38 bewegt, insbesondere dreht, wobei die beiden Achsen 34, 38 schräg zueinander verlaufen.

In einer festen 45°-Stellung der Ablenkeinheit 18 würde während der Drehbewegung durch den Hauptantrieb 28 wie in einem herkömmlichen Laserscanner eine Ebene abgetastet. Die Bewegung durch den Zusatzantrieb 36 sorgt für eine zusätzliche Ablenkung in Höhenrichtung senkrecht zu dieser Ebene, wie durch einen Doppelpfeil 40 angedeutet. In der Überlagerung entsteht eine dreidimensionale Abtastkurve, deren Gestalt von dem Prismenwinkel der Ablenkeinheit 18, dem Winkel zwischen den Achsen 34, 38 und den Bewegungsmustern von Hauptantrieb 28 und Zusatzantrieb 36 abhängt.

Der mitbewegte Zusatzantrieb 36 wird vorzugsweise über eine drahtlose Versorgung 42a-b von einer Versorgung 44 im ruhenden Teil des Sensors 10 aus versorgt. Dieser ruhende Teil, also die Sensorelemente außer der Abtasteinheit 30, wird auch als Sockeleinheit bezeichnet. In den Hauptantrieb 28 kann alternativ ein mitbewegter Versorgungsanschluss an dessen Welle 32 integriert sein, der vorzugsweise auf einer drahtlosen Übertragung basiert und die separate drahtlose Versorgung 42a-b ersetzt.

Eine Steuer- und Auswertungseinheit 46 ist mit dem Lichtsender 12 und dem Lichtempfänger 26 verbunden, um den Sendelichtstrahl 16 zu erzeugen und ein aus remittiertem Licht 22 in dem Lichtempfänger 26 erzeugtes Empfangssignal auszuwerten. Bei dieser Auswertung wird festgestellt, ob ein Objekt erfasst wurde und insbesondere dessen Entfernung nach einem Lichtlaufzeitverfahren gemessen. Die Steuer- und Auswertungseinheit 46 steuert außerdem den Hauptantrieb 28 und erhält das Winkelsignal des Encoders. Sofern eine Datenübertragung zur Abtasteinheit 18 vorhanden ist, kann auch der Zusatzantrieb 36 angesteuert und dessen Drehstellung überwacht werden. Damit stehen in der Steuer- und Auswertungseinheit 46 dreidimensionale Positionsdaten der erfassten Objektpunkte zur Verfügung. Der Sensor 10 ist durch ein nicht dargestelltes Gehäuse umgeben, das im Bereich des Strahldurchtritts durch eine umlaufende Frontscheibe abgeschlossen wird.

Der Aufbau gemäß Figur 1 lässt zahlreiche Variationen zu. Zunächst kann die kollineare optische Anordnung auch durch einen Strahlteiler erreicht werden, oder es werden anstelle einer Sendelinse 14 im Zentrum einer Empfangslinse 24 nebeneinander liegende Doppellinsen eingesetzt.

Eine Erweiterung des Abtastbereichs von einer Ebene auf eine dreidimensionale Abtastkurve erreicht das Beispiel nach Figur 1 durch den rotierenden Prismenspiegel als Ablenkungseinheit 18. Der optische Effekt ist letztlich, dass der Einfallswinkel variiert, also die spiegelnde Fläche je nach Drehstellung in unterschiedlichem Einfallswinkel getroffen wird. Auf die übrige Form der Ablenkeinheit 18 kommt es nicht an, so dass sie nicht zwangsläufig prismenförmig sein muss. Alternativ lässt sich ein variierender Einfallswinkel auch erreichen, indem Lichtsender 12 beziehungsweise Lichtempfänger 26 rotieren, und zwar um eine Achse, die zu den optischen Achsen schräg steht. Dann beschreibt der Lichtstrahl ebenso einen Kegelmantel wie durch die Rotation mittels des Zusatzantriebs und sorgt so für die Höhenvariation der Abstastung.

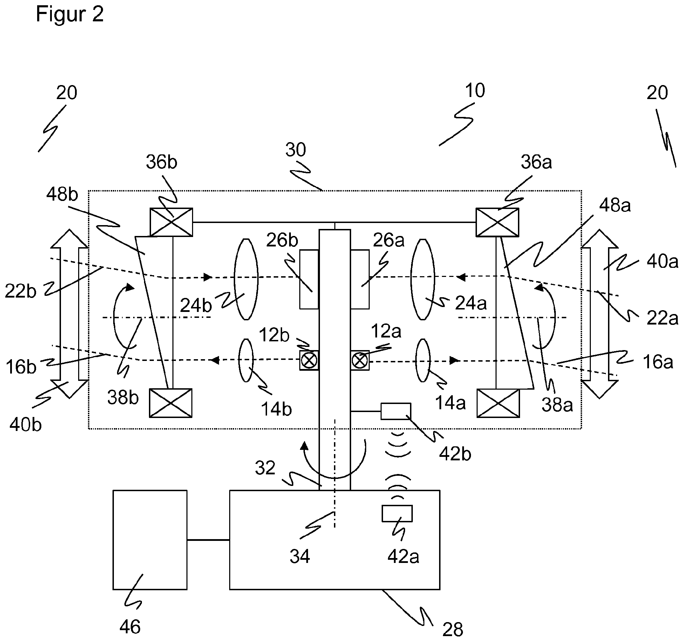

Figur 2 zeigt eine Ausführungsform eines als Laserscanner ausgebildeten Sensors 10. Dabei bezeichnen überall gleiche Bezugszeichen die gleichen oder einander entsprechende Merkmale. Im Unterschied zu Figur 1 sind hier Lichtsender 12a-b und Lichtempfänger 26a-b zusammen mit den zugehörigen Sendeoptiken 14a-b und Empfangsoptiken 24a-b in der Abtasteinheit 30 untergebracht, vollziehen also die durch den Hauptantrieb 28 erzeugte Drehbewegung mit. Die Abtasteinheit 30 bildet so einen rotierenden Optik- oder Messkopf. Eine drahtlose Übertragungseinheit 42a-b versorgt die Elemente der Abtasteinheit 30 und verbindet die Steuer- und Auswertungseinheit 46 mittels drahtlosem Datenaustausch mit der Abtasteinheit 30.

Eine solche Abtasteinheit 30 hat den Vorteil, dass darin relativ einfach mehrere Messsysteme untergebracht werden können, wie im Beispiel der Figur 2 zwei Sende-/Empfangseinheiten 12a-b, 26a-b zur Messung in eine Vorwärts- und Rückwärtsrichtung. Variationen dieser Anordnung sehen einen anderen Winkelversatz vor als die gezeigten 180°, verteilen zusätzliche Sende-/ Empfangseinheiten in Winkelrichtung, etwa drei Sende-/Empfangseinheiten im Winkelabstand von 120°, oder auch in Höhenrichtung mit zwei oder mehr Sende-/Empfangseinheiten übereinander. Es ist aber auch möglich, lediglich eine Sende-/Empfangseinheit 12a-b, 26a-b vorzusehen.

Den Sende-/Empfangseinheiten 12a-b, 26a-b ist jeweils eine weitere Ablenkeinheit hier in Form eines Prismas 48a-b vorgeordnet, das über jeweils einen Zusatzantrieb 36a-b bewegt und insbesondere in Rotation versetzt wird. Die Prismen 48a-b sorgen für einen Höhenversatz, und im Zusammenspiel mit der Drehbewegung der Abtasteinheit 30 selbst entsteht ein dreidimensionales Abtastmuster. Dabei können je nach Anzahl der Sende-/Empfangseinheiten 12a-b, 26a-b mehrere, je nach Bewegungsmuster der Prismen 48a-b auch unterschiedliche dreidimensionale Abtastkurven gleichzeitig erfasst werden. Es ist auch denkbar, nur vor einem Teil der Sende-/Empfangseinheiten 12a-b, 26a-b ein Prisma 48a-b vorzusehen, wobei die übrigen Sende-/Empfangseinheiten 12a-b, 26a-b dann wie herkömmlich eine Ebene abtasten.

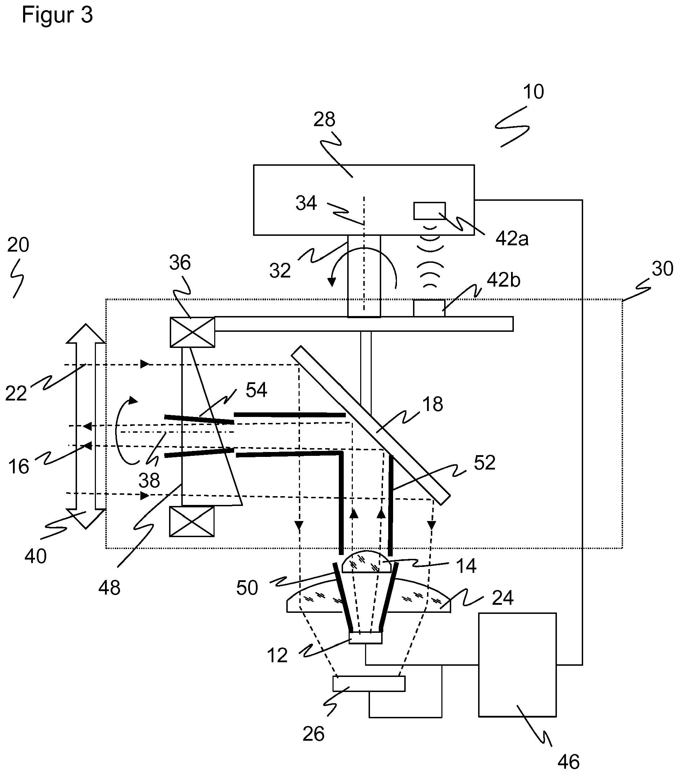

Figur 3 zeigt eine weitere Ausführungsform eines als Laserscanner ausgebildeten Sensors 10. Hier sind Lichtsender 12 und Lichtempfänger 26 wieder außerhalb der bewegten Abtasteinheit 30 angeordnet. Eine Kanaltrennung gemäß Figur 3, die sogleich erläutert wird, wäre aber auch in einer Ausführungsform gemäß Figur 2 mit mitbewegten Lichtsendern 12a-b und Lichtempfängern 26a-b denkbar.

Um ein optisches Übersprechen zu verhindern, was auch als Kanaltrennung bezeichnet wird, ist der Sendepfadbereich des ausgesandten Abtaststrahls 16 von einem nicht lichtdurchlässigen Tubus umgeben. Dieser Tubus hat drei Komponenten, die aber auch einzeln schon einen Teileffekt bewirken und deshalb nicht zwingend zugleich vorgesehen sein müssen. Ein erster Tubusbereich 50 schirmt die Empfangslinse 24 von dem Abstrahlbereich des Lichtsenders 12 bis zur Sendelinse 14 ab. Ein zweiter Tubusbereich 52 umgibt rohrförmig den Sendepfad zu der ersten Ablenkeinheit 18 und weiter zu dem Prisma 48. Ein dritter Tubusbereich 54 schirmt innerhalb des Prismas 48 den Austrittsbereich des Abtaststrahls 16 von dem Eintrittsbereich des remittierten Lichts 22 ab. Die Trennung des Tubus' 50, 52, 54 in drei Bereiche erfolgt, weil sich die Abtasteinheit 30 durch den Hauptantrieb 18 relativ zu Sendelinse 14 und Empfangslinse 24 und das Prisma 48 durch den Zusatzantrieb 36 relativ zu der Abtasteinheit 30 bewegt.

## Patentansprüche

1. Optoelektronischer Sensor (10), insbesondere Laserscanner, zur Erfassung von Objekten in einem Überwachungsbereich (20), der einen Lichtsender (12) zum Aussenden eines Lichtstrahls (16), einen Hauptantrieb (28), eine von dem Hauptantrieb (28) bewegte erste Ablenkeinheit (30) zur periodischen Ablenkung des Lichtstrahls (16), einen mit der ersten Ablenkeinheit (30) mitbewegten Zusatzantrieb (36) zum Bewegen einer weiteren Ablenkeinheit (48) zur zusätzlichen Ablenkung des Lichtstrahls (16), einen Lichtempfänger (36) zum Erzeugen eines Empfangssignals aus dem in dem Überwachungsbereich (20) remittierten oder reflektierten Lichtstrahl (22) sowie eine Auswertungseinheit (46) aufweist, welche für die Erfassung der Objekte anhand des Empfangssignals ausgebildet ist, wobei der Sensor (10) eine Sockeleinheit mit dem Hauptantrieb (28) und eine Abtasteinheit (30) mit der ersten Ablenkeinheit (30), dem Zusatzantrieb (36) und der weiteren Ablenkeinheit (48) aufweist, **dadurch gekennzeichnet, dass** die Abtasteinheit (30) mehrere Lichtempfänger (26a-b) und/oder Lichtsender (12a-b) aufweist, die in der Abtasteinheit (30) untergebracht sind, und dass mehrere Zusatzantriebe (36a-b) und weitere Ablenkeinheiten (48a-b) vorgesehen sind, die jeweils Lichtempfängern (26a-b) und/oder Lichtsendern (12a-b) zugeordnet sind und dass die weiteren Ablenkeinheiten (48) ein Prisma aufweisen, so dass die zusätzliche Ablenkung des Lichtstrahls (16) in Transmission erfolgt.

2. Sensor (10) nach Anspruch 1, wobei die periodische Bewegung der ersten Ablenkeinheit (30) und/oder die Bewegung der weiteren Ablenkeinheit (48) eine Drehbewegung ist.

3. Sensor (10) nach Anspruch 1 oder 2, der eine drahtlose Versorgungseinheit (42a-b) zur Versorgung des Zusatzantriebs (36) aufweist.

4. Sensor (10) nach einem der vorhergehenden Ansprüche, wobei ein Tubus (50, 52, 53) vorgesehen ist, welcher einen Sendelichtpfad des ausgesandten Lichtstrahls(16) umgibt.

5. Sensor (10) nach einem der vorhergehenden Ansprüche,
wobei die zweite Ablenkeinheit (48) einen Tubusabschnitt (54) aufweist.

6. Verfahren zum Erfassen von Objekten in einem Überwachungsbereich (20) mit einem Sensor (10), der eine Sockeleinheit mit einem Hauptantrieb (28) und eine Abtasteinheit (30) mit einer ersten Ablenkeinheit (30), einem Zusatzantrieb (36) und einer weiteren Ablenkeinheit (48) aufweist, wobei die Abtasteinheit (30) mehrere Lichtempfänger (26a-b) und Lichtsender (12a-b) aufweist, die in der Abtasteinheit (30) untergebracht sind, wobei von den Lichtsendern (12a-b) jeweils ein Lichtstrahl (16) ausgesandt, an der durch den Hauptantrieb (28) periodisch bewegten ersten Ablenkeinheit (30) und zusätzlich an der von dem mit der ersten Ablenkeinheit (30) mitbewegten Zusatzantrieb (36) bewegten weiteren Ablenkeinheit (48) abgelenkt wird, und in den Lichtempfängern (26a-b) aus dem jeweiligen in dem Überwachungsbereich (20) remittierten oder reflektierten Lichtstrahl (22) ein Empfangssignal erzeugt und zum Erfassen der Objekte ausgewertet wird, wobei die zusätzliche Ablenkung an mehreren weiteren Ablenkeinheiten (48a-b) erfolgt, die jeweils einem Lichtempfänger (26a-b) und Lichtsender (12a-b) zugeordnet sind und durch einen von mehreren Zusatzantrieben (36a-b) bewegt werden, und dass die zusätzliche Ablenkung in der weiteren Ablenkeinheiten (48) in Transmission in einem Prisma der weiteren Ablenkeinheiten (48) erfolgt

## Claims

1. An optoelectronic sensor (10), in particular a laser scanner, for detecting objects in a monitoring area (20), comprising a light transmitter (12) for transmitting a light beam (16), a main drive (28), a first deflection unit (30) moved by the main drive (28) for periodically deflecting the light beam (16), an additional drive (36) moving with the first deflection unit (30) for moving an additional deflection unit (48) for additionally deflecting the light beam (16), a light receiver (36) for generating a reception signal from the light beam (22) reflected or remitted in the monitoring area (20), and an evaluation unit (46) configured to detect the objects based on the reception signal, wherein the sensor (10) comprises a base unit with the main drive (28) and a scanning unit (30) with the first deflection unit (30), the additional drive (36) and the additional deflection unit (48), **characterized in that** the deflection unit (30) comprises a plurality of light receivers (26a-b) and/or light transmitters (12a-b) accommodated in the deflection unit (30), **in that** a plurality of additional drives (36a-b) and additional deflection units (48a-b) are provided and assigned to respective light receivers (26a-b) and/or light transmitters (12a-b), and **in that** the additional deflection units (48) comprise a prism so that the additional deflection of the light beam (16) takes place in transmission.

2. The sensor (10) according to claim 1,
wherein the periodic movement of the first deflection unit (30) and/or the movement of the additional deflection unit (48) is a rotary movement.

3. The sensor (10) according to claim 1 or 2,
comprising a wireless supply unit (42a-b) for supplying the additional drive (36).

4. The sensor (10) according to any of the preceding claims,
wherein a tube (50, 52, 53) is provided which surrounds a transmission light path of the transmitted light beam (16).

5. The sensor (10) according to any of the preceding claims,
wherein the second deflection unit (48) comprises a tube section (54).

6. A method for detecting objects in a monitoring area (20) with a sensor (10) comprising a base unit with a main drive (28) and a scanning unit (30) with a first deflection unit (30), an additional drive (36) and an additional deflection unit (48), wherein the scanning unit (30) comprises a plurality of light receivers (26a-b) and light transmitters (12a-b) accommodated in the scanning unit (30), wherein a respective light beam (16) is transmitted by the light transmitters (12a-b), is deflected by the first deflection unit (30) periodically moved by the main drive (28) and additionally deflected by the additional deflection unit (48) moved by the additional drive (36) which in turn is moving with the first deflection unit (30), and a reception signal is generated in the light receivers (26a-b) from the respective light beam (22) remitted or reflected in the monitoring area (20) and is evaluated for detecting the objects,
**characterized in that** the additional deflection takes place at a plurality of additional deflection units (48a-b) which are assigned to a respective light receiver (26a-b) and light transmitter (12a-b) and are moved by one of a plurality of additional drives (38a-b), and **in that** the additional deflection in the additional deflection units (48) takes place in transmission in a prism of the additional deflection units (48).

## Revendications

1. Capteur optoélectronique (10), en particulier scanner à laser, pour la détection d'objets dans une zone de surveillance (20), qui comprend un émetteur de lumière (12) pour émettre un rayon de lumière (16), un entraînement principal (28), une première unité de déflexion (30) déplacée par l'entraînement principal (28) pour un balayage périodique du rayon de lumière (16), un entraînement supplémentaire (36) déplacé conjointement avec la première unité de déflexion (30) et destiné à déplacer une autre unité de déflexion (48) pour une déflexion supplémentaire du rayon de lumière (16), un récepteur de lumière (36) pour engendrer un signal de réception à partir du rayon de lumière (22) réémis ou réfléchi dans la zone de surveillance (20), ainsi qu'une unité d'évaluation (46), dans lequel le capteur (10) comprend une unité formant socle avec l'entraînement principal (28) et une unité de balayage (30) avec la première unité de déflexion (30), l'entraînement supplémentaire (36) et l'unité de déflexion supplémentaire (48),
**caractérisé en ce que** l'unité de balayage (30) comprend plusieurs récepteurs de lumière (26a-b) et/ou plusieurs émetteurs de lumière (12a-b), qui sont logés dans l'unité de balayage (30), et
**en ce qu'**il est prévu plusieurs entraînements supplémentaires (36a-b) et plusieurs autres unités de déflexion (48a-b), qui sont associé(e)s chacun(e) à des récepteurs de lumière (26a-b) et/ou des émetteurs de lumière (12a-b), et **en ce que** les autres unités de déflexion (48) comprennent un prisme, de sorte que la déflexion supplémentaire du rayon de lumière (16) a lieu en transmission.

2. Capteur (10) selon la revendication 1,
dans lequel le mouvement périodique de la première unité de déflexion (30) et/ou le mouvement de l'autre unité de déflexion (48) est un mouvement de rotation.

3. Capteur (10) selon la revendication 1 ou 2,
qui comprend une unité d'alimentation sans fil (42a-b) pour l'alimentation de l'entraînement supplémentaire (36).

4. Capteur (10) selon l'une des revendications précédentes,
dans laquelle il est prévu un tube (50, 52, 53), qui entoure un trajet de lumière émise du rayon de lumière (16) émis.

5. Capteur (10) selon l'une des revendications précédentes,
dans lequel la seconde unité de déflexion (48) comprend un tronçon de tube (54).

6. Procédé pour détecter des objets dans une zone de surveillance (20) avec un capteur (10) qui comprend une unité formant socle avec un entraînement principal (28) et une unité de balayage (30) avec une première unité de déflexion (30), un entraînement supplémentaire (36) et une autre unité de déflexion (48), dans lequel l'unité de balayage (30) comprend plusieurs récepteurs de lumière (26a-b) et plusieurs émetteurs de lumière (12a-b), qui sont logés dans l'unité de balayage (30), dans lequel un rayon de lumière respectif (16) est émis par les émetteurs de lumière (12a-b), est défléchi sur la première unité de déflexion (30) déplacée périodiquement par l'entraînement principal (28) et est défléchi additionnellement sur l'unité de déflexion supplémentaire (48) déplacée par l'entraînement supplémentaire (36) déplacé conjointement avec la première unité de déflexion (30), et à partir du rayon de lumière (22) réémis ou réfléchi respectivement dans la zone de surveillance (20) un signal de réception est engendré dans les récepteurs de lumière (26a-b) et est évalué pour détecter les objets,
dans lequel la déflexion supplémentaire a lieu sur plusieurs autres unités de déflexion (48a-b), qui sont respectivement associées à un récepteur de lumière (26a-b) et à un émetteur de lumière (12a-b) et sont déplacées par un ou plusieurs entraînements supplémentaires (36a-b), et en ce que la déflexion supplémentaire a lieu dans les autres unités de déflexion (48) en transmission dans un prisme des autres unités de déflexion (48).
